Europäisches Patentamt

European Patent Office

Office européen des brevets

(19)

(11) Veröffentlichungsnummer: **0 048 047**
**B1**

(12) # EUROPÄISCHE PATENTSCHRIFT

(45) Veröffentlichungstag der Patentschrift:
06.08.86

(51) Int. Cl.⁴: **G 06 F 7/02**

(21) Anmeldenummer: **81200944.7**

(22) Anmeldetag: **27.08.81**

(54) **Anordnung zur Erkennung eines binären Wortes.**

(30) Priorität: **13.09.80 DE 3034640**

(43) Veröffentlichungstag der Anmeldung:
**24.03.82 Patentblatt 82/12**

(45) Bekanntmachung des Hinweises auf die Patenterteilung:
**06.08.86 Patentblatt 86/32**

(84) Benannte Vertragsstaaten:
**BE DE FR GB SE**

(56) Entgegenhaltungen:
**DE - C - 885 102**
**GB - A - 2 017 447**
**US - A - 3 732 563**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **BE FR GB SE**

(72) Erfinder: **Killat, Ulrich, Dr., Forsteck 33,
D-2000 Hamburg 55 (DE)**

(74) Vertreter: **Poddig, Dieter et al, Philips Patentverwaltung
GmbH Billstrasse 80 Postfach 10 51 49,
D-2000 Hamburg 28 (DE)**

**Beschreibung**

Die Erfindung betrifft eine Anordnung zur Erkennung eines binären Wortes oder eines vorbestimmten Impulsmusters aus einem Impulsstrom, mit Verzögerungselementen, die derart gewählt sind, dass die Verzögerung eines Verzögerungselementes, das einem Impuls aus dem zu erkennenden Impulsmuster zugeordnet ist, dem relativen Zeitabstand des zu verzögernden Impulses in bezug auf den letzten Impuls aus dem Impulsmuster entspricht, und die weiter mit ihren einen Enden an ein Ende eines Leiters zum Transportieren des Impulsstromes parallel angeschlossen sind, weiter mit einem Koinzidenzelement zum Detektieren zeitlich koinzidierender Impulse an den anderen Enden der Verzögerungselemente.

Eine derartige Anordnung ist aus der DE-G 885 102 bekannt. Durch die spezifische Wahl der Verzögerung der Verzögerungselemente sowie durch die Tatsache, dass sie mit dem Leiter zum Transportieren des Impulsstromes parallel verbunden sind, wird erreicht, dass zu einem bestimmten Zeitpunkt die verschiedenen Impulse, aus denen das Impulsmuster aufgebaut ist, gleichzeitig den anderen Enden der Verzögerungselemente zugeführt werden. Das Koinzidenzelement, das hier an das andere Ende der Verzögerungselemente angeschlossen ist, detektiert dabei diese zeitlich koinzidierenden Impulse, wodurch das Impulsmuster erkennbar ist. Dieses Impulsmuster kann dabei zum Beispiel für die Synchronisation eines Empfängers mit einem Sender benutzt werden.

Ein Nachteil einer derartigen Anordnung besteht darin, dass sie störempfindlich ist. Da die Impulse dem Koinzidenzelement direkt zugeführt werden, kann ein in der direkten Umgebung eines Impulses aus dem Impulsmuster befindlicher Störimpuls leistungsfähig genug sein, das Koinzidenzelement zu aktivieren. Die Genauigkeit einer derartigen Anordnung kann ungenügend sein, insbesondere bei der Verarbeitung schneller Signale.

Der Erfindung liegt die Aufgabe zugrunde, eine Anordnung mit einer höheren Genauigkeit und einer geringeren Störempfindlichkeit zu schaffen.

Diese Aufgabe wird mit einer Anordnung nach der Erfindung dadurch gelöst, dass die anderen Enden einer ersten Anzahl der Verzögerungselemente mit je einem Eingang eines ersten Addierers und die anderen Enden einer zweiten Anzahl der Verzögerungselemente mit je einem Eingang eines zweiten Addierers verbunden sind, wobei die Verbindung eines Endes mit beiden Addierern ausgeschlossen ist und wobei die erste und die zweite Anzahl zusammen die Gesamtheit der Verzögerungselemente bilden, wobei die Verteilung auf die erste und zweite Anzahl durch den Bitwert der Impulse des zu erkennenden Impulsmusters bestimmt ist, das aus einem Bitmuster mit vorgegebener Reihenfolge der Bitwerte 0 und 1 aufgebaut ist, wobei der eine Bitwert die Abwesenheit und der andere Bitwert das Vorhandensein eines Impulses im Zeitraster des Impulsstromes darstellt, wobei ein Ausgang des ersten Addierers und ein Ausgang des zweiten Addierers mit je einem Eingang des Koinzidenzelementes verbunden sind, das einen Differenzverstärker zur Differenzbestimmung zwischen einem Ausgangssignal des ersten Addierers und einem Ausgangssignal des zweiten Addierers enthält. Durch die bitwertmässige Unterscheidung der Impulse und die Zuführung dieser Impulse an einen Addierer liefert beim Koinzidieren der Impulse aus dem Impulsmuster am Eingang des ersten und des zweiten Addierers der erste Addierer zum Beispiel ein Signal mit einem Maximum an seinen Ausgang und der zweite Addierer dabei ein Signal mit einem Minimum an seinen Ausgang. Durch die Subtraktion des Signals mit einem Minimum vom Signal mit einem Maximum entsteht ein Signal mit einem stark zugespitzten Maximum, das beim Koinzidieren der Impulse auftritt. Hierdurch kann die Anordnung mit hoher Genauigkeit das Impulsmuster erkennen.

Eine bevorzugte Ausführungsform einer erfindungsgemässen Anordnung ist dadurch gekennzeichnet, dass der Impulsstrom ein von einem Lichtleiter transportierbarer Lichtimpulsstrom ist, dass der erste und der zweite Addierer fotoempfindliche Elemente sind, und dass weiter die Verzögerungsleiter Verzögerungslichtleiter sind. Derartige Lichtleiter haben den Vorteil, dass die Informationen mit sehr hoher Geschwindigkeit, d.h. mit sehr hoher Bitfrequenz, übertragen werden können. Daher wird allgemein die binärkodierte Information einer Vielzahl von Nachrichtenkanälen in bekannter Weise zeitverschachtelt über nur einen Lichtleiter übertragen. Die in einem Lichtleiter übertragenen Lichtimpulse werden vor der weiteren Verarbeitung mittels fotoempfindlicher Elemente in elektrische Impulse umgewandelt und digitalen Schaltungen zur weiteren Verarbeitung zugeführt. Bei einem linear betriebenen Differenzverstärker ist es nach einer weiteren Ausgestaltung der Erfindung zweckmässig, dass dem Differenzverstärker ein Schwellwertschalter nachgeschaltet ist, dessen Schwellwert der Differenz zwischen einem ersten und einem zweiten vorgegebenen Wert entspricht und der bei Überschreiten des Schwellwertes ein Übereinstimmungssignal abgibt. Durch die Wahl des Schwellwertes kann die Erkennungssicherheit bzw. die zulässige Abweichung von dem Bitmuster des zu suchenden binären Wortes leicht eingestellt werden.

Die Aufteilung des empfangenen Bitstromes auf alle Verzögerungslichtleiter gleichzeitig kann zweckmässig dadurch erreicht werden, dass den einen Enden aller Verzögerungslichtleiter ein optischer Strahlteiler vorgeschaltet ist. Ein solcher optischer Strahlenteiler kann vorzugsweise Phasengitter enthalten. Diese können so aufgebaut sein, dass sich eine gleichmässige Aufteilung auf die Enden aller Verzögerungsleiter ergibt.

Ausführungsbeispiele der Erfindung werden nachstehend anhand der Zeichnung erläutert. Es zeigen

Fig. 1 den schematischen Aufbau der genannten Anordnung, Fig. 2 mehrere Diagramme mit dem zeitlichen Verlauf der Signale der Anordnung nach Fig. 1,

Fig. 3 den grundsätzlichen Aufbau eines Strahlteilers.

Die Erfindung wird nachstehend anhand einer Ausführungsform erläutert, bei der für den Impulsstrom Lichtimpulse benutzt werden. Die Erfindung beschränkt sich jedoch nicht auf diese Ausführungsform.

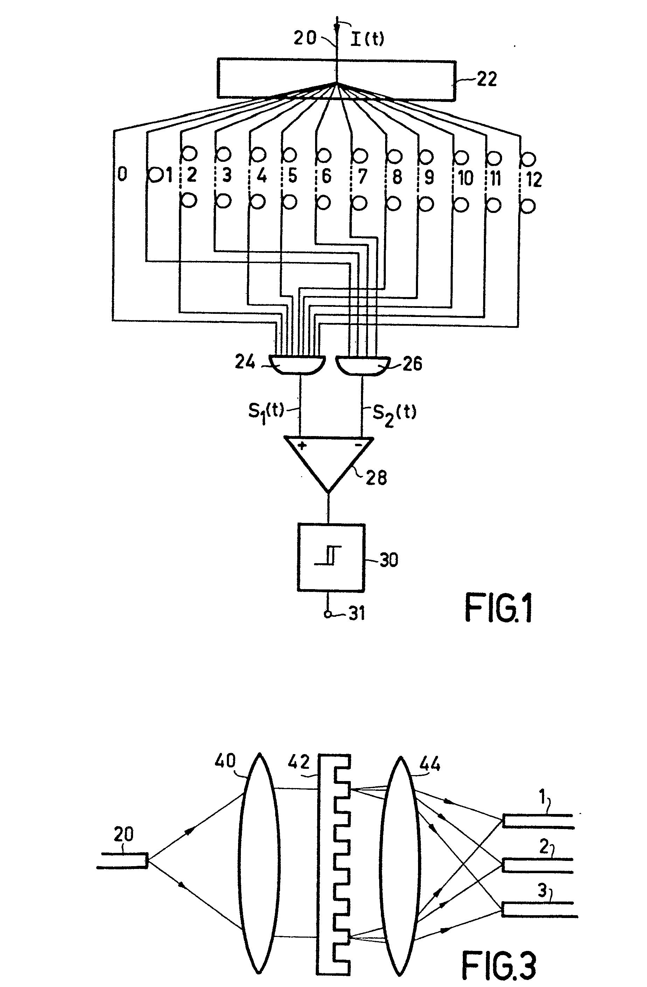

Bei der in Fig. 1 dargestellten Anordnung wird über den Lichtleiter 20 der Bitstrom, ggf. nach Regeneration und Verstärkung, einem Strahlteiler 22 zugeführt. Der Bitstrom wird dabei durch eine zeitliche Folge von Lichtimpulsen gebildet, die im Zeitraster des Bitstromes aufeinanderfolgen, wobei ein Lichtimpuls in einem Rasterelement ein Bit mit dem Wert «1» und ein fehlender Lichtimpuls in einem Rasterelement ein Bit mit dem Wert «0» darstellt. Der Strahlteiler 22, für den eine Realisierungsmöglichkeit an einer späteren Stelle angegeben wird, teilt die ankommenden Lichtimpulse gleichzeitig auf die einen Enden einer Anzahl Verzögerungslichtleiter 0 bis 12 auf, d. h. auf 13 Verzögerungslichtleiter, so dass jeder gleichzeitig einen entsprechenden Bruchteil der ankommenden Lichtenergie erhält. Es wird also vorausgesetzt, dass die in dem Lichtleiter 20 eintreffenden Lichtimpulse ausreichende Energie haben, was in bekannter Weise durch Umwandeln eines schwachen Lichtsignals mittels eines fotoempfindlichen Elementes in ein elektrisches Signal, das nach Verstärkung dann wieder ein lichtaussendendes Element ansteuert, erreicht werden kann.

Die Verzögerungslichtleiter 0 bis 12 sind den aufeinanderfolgend eintreffenden verschiedenen Bits des gesuchten binären Wortes zugeordnet, wobei der Verzögerungslichtleiter 12 dem zuerst eintreffenden Bit und der Verzögerungslichtleiter 0 dem zuletzt eintreffenden Bit des gesuchten binären Wortes zugeordnet ist. Die einzelnen Verzögerungslichtleiter 0 bis 12 haben verschiedene Länge, die so gewählt ist, dass ein am einen Ende vom Strahlteiler 22 zugeführter Lichtimpuls nach einer solchen Verzögerungszeit am anderen Ende wieder austritt, dass diese Verzögerungszeit gleich dem zeitlichen Abstand des dem betreffenden Lichtleiter zugeordneten Bits im zu suchenden binären Wort vom zuletzt eintreffenden Bit in diesem Wort ist. Die Längen benachbarter Verzögerungslichtleiter unterscheiden sich somit jeweils um eine Länge, die dem zeitlichen Abstand zweier aufeinanderfolgender Bits im Lichtleiter 20 entspricht, d. h. ihre Länge ist ein entsprechend der zugeordneten Bitstelle im Wort ganzzahliges Vielfaches dieser Einheitslänge. Für den Verzögerungslichtleiter 0 besteht dabei die Bedingung, dass er eine Verzögerungszeit von praktisch gleich 0 bezüglich dem Abstand aufeinanderfolgender Bits in Lichtleiter 20 hat. Falls dies jedoch durch den Aufbau bedingt nicht möglich ist, können alle Verzögerungslichtleiter 1 bis 12 um die tatsächlich vorhandene Länge des Verzögerungslichtleiters 0 gegenüber ihrem vorher beschriebenen Nennwert verlängert werden, so dass eine Verzögerungszeit des Verzögerungslichtleiters 0 sich praktisch nicht auswirkt.

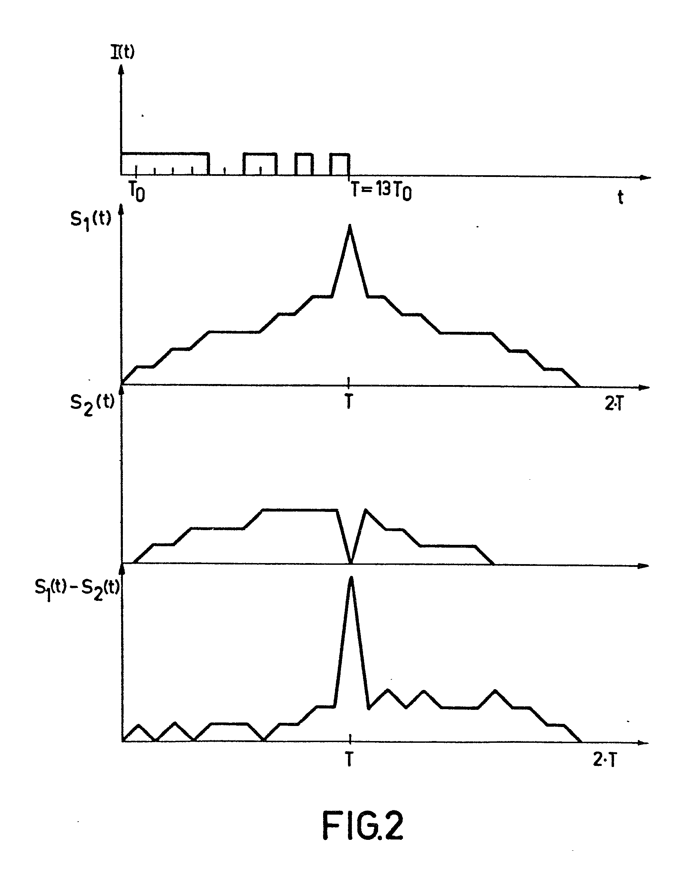

Die vom Strahlteiler 22 abgekehrten Enden der Verzögerungslichtleiter 0 bis 12 sind nun auf eines der fotoempfindlichen Elemente 24 und 26 geführt. Welcher der Lichtleiter mit welchem fotoempfindlichen Element verbunden wird, wird durch den Wert des dem betreffenden Lichtleiter zugeordneten Bits bestimmt, das dieses in dem zu suchenden binären Wort hat. Die in Fig. 1 angegebene Kombination der Verbindungen geht von einem zu suchenden Wort in dem Bitstrom $I(t)$ aus, das in der Fig. 2 oben dargestellt ist. Da die Zeitachse nach rechts verläuft, ist das an die Abszissenachse anschliessende Bit das als erstes eintreffende Bit, während das zum Zeitpunkt $T = 13T_0$, d. h. 13 Bitabstände bzw. Zeitrasterelemente $T_0$ später endende Bit das als letztes eintreffende Bit ist. Das zuerst eintreffende Bit ist somit dem Verzögerungslichtleiter 12 zugeordnet, der auf das fotoempfindliche Element 24 führt, das somit dem Wert dieses Bits zugeordnet ist. Da das zu suchende Wort zu Beginn 5 Bits gleichen Werts hat, führen die Verzögerungslichtleiter 8 bis 12 alle auf das fotoempfindliche Element 24. Danach folgen zwei Bits anderer Wertigkeit, so dass die Verzögerungslichtleiter 7 und 6 auf das fotoempfindliche Element 26 geführt sind. In entsprechende Weise sind auch die übrigen Lichtleiter 5 bis 0 auf die fotoempfindlichen Elemente 24 und 26 geführt.

An den Ausgängen der fotoempfindlichen Elemente 24 und 26 treten somit Signale $S_1(t)$ und $S_2(t)$ auf, deren Amplitude von der Anzahl der Verzögerungslichtleiter abhängt, die gleichzeitig einen Lichtimpuls dem betreffenden Detektor zuführen. Der zeitliche Verlauf der Signale $S_1(t)$ und $S_2(t)$ ist in Fig. 2 in den entsprechend bezeichneten Diagrammen dargestellt, wobei angenommen wird, dass nur eine Bitfolge entsprechend dem zu suchenden binären Wort zugeführt wird. Dabei durchlaufen die zeitlich nacheinander eintreffenden Lichtimpulse entsprechend den Bitwerten im zu suchenden Wort selbstverständlich alle Verzögerungslichtleiter 0 bis 12, treten jedoch zu verschiedenen Zeitpunkten an deren Ausgängen aus. Erst wenn der letzte Lichtimpuls entsprechend dem letzten Bit des zu suchenden Wortes eintrifft, tritt der erste Lichtimpuls am Ausgang des Verzögerungslichtleiters 12 auf, und die 4 auf den ersten Lichtimpuls folgenden Lichtimpulse treten gleichzeitig an den Ausgängen der Verzögerungslichtleiter 8 bis 11 auf, während an den Ausgängen der Verzögerungslichtleiter 7 und 6 gerade keine Lichtimpulse auftreten, usw. Zu diesem Zeitpunkt $T$ liefern also alle auf das fotoempfindliche Element 24 geführten Verzögerungslichtleiter gleichzeitig einen Lichtimpuls, während zu diesem Zeitpunkt $T$ das fotoempfindliche Element 26 gerade von keinem zugeführten Verzögerungslichtleiter einen Lichtimpuls erhält. Damit hat das Signal $S_1(t)$ in diesem Augenblick $T$ gerade seinen maximalen Wert, während das Signal $S_2(t)$ in diesem Augenblick gerade den minimalen Wert hat.

Aus den entsprechenden Diagrammen in Fig. 2 ist zu erkennen, dass dieses Maximum im Signal

$S_1(t)$ zwar erkennbar ist, dass jedoch zumindest die unmittelbar benachbarten Signalwerte ebenfalls relativ gross sind, so dass bei Anwendung eines festen Schwellwertes nur auf das Signal $S_1(t)$ bei toleranzbedingten Unterschieden in der Energie der Lichtimpulse nicht sichergestellt ist, dass genau nur das richtige Maximum erfasst wird. Durch Verknüpfung der beiden Signale $S_1(t)$ und $S_2(t)$ lässt sich jedoch ein Ausgangssignal gewinnen, das hierüber eine wesentlich sicherere Aussage erlaubt. Eine solche Verknüpfung ist beispielsweise die Differenzbildung, und der zeitliche Verlauf der Differenz $S_1(t) - S_2(t)$ ist in Fig. 2 dargestellt. Hier ergibt sich zum Zeitpunkt T ein maximaler Wert, der sich sehr stark von den Werten unmittelbar benachbarter Zeitpunkte unterscheidet. Hier lässt sich also ein Schwellwert angeben, der auch bei toleranzbedingten Unterschieden der Energie der Lichtimpulse bei Zufuhr der Folge der Lichtimpulse entsprechend der Bitfolge des zu suchenden Wortes überschritten wird, während bei einer Abweichung von dieser Folge der Differenzwert sicher unter dem Schwellwert liegt.

Das Verhältnis dieses Differenzwertes für die flüchtige Bitfolge bzw. Lichtimpulsfolge zu einer beliebigen anderen Bitfolge hängt selbstverständlich von der Bitfolge in dem Suchwort ab. In der Tabelle in dem Anhang sind vier Beispiele für Bitfolgen von Suchwörtern angegeben sowie das Verhältnis des Maximalwertes zu dem grössten Wert ausserhalb des Maximalwertes. Wenn anstatt des Suchwortes eine Bitfolge zugeführt wird, deren Bitwerte an einer Anzahl Stellen von den Bitwerten des Suchwortes, die verschieden sind, verringert sich der maximale Wert um eine Anzahl Einheiten entsprechend der Anzahl Stellen mit unterschiedlichen Bitwerten, während die höchsten Werte ausserhalb des maximalen Wertes etwas ansteigen. Dadurch ist es bei geeigneter Wahl eines Schwellwertes möglich, beispielsweise störungsbedingte Abweichungen von der Bitfolge des zu suchenden binären Wortes zuzulassen, beispielsweise eine Abweichung in einer Stelle, bei der noch eine Erkennung des gesuchten Wortes angezeigt wird, da eine solche abweichende Bitfolge innerhalb der normalerweise übertragenen Information ebenfalls äusserst unwahrscheinlich ist.

In Fig. 1 wird die Differenz zwischen den beiden Signalen $S_1(t)$ und $S_2(t)$ durch einen Differenzverstärker 28 gebildet, dessen beiden Eingängen diese Signale zugeführt werden. An den Ausgang des Differenzverstärkers 28 ist ein Schwellwertschalter 30 angeschlossen, der am Ausgang 31 ein Übereinstimmungssignal erzeugt, wenn das Ausgangssignal des Differenzverstärkers 28 den Schwellwert des Schwellwertschalters 30 überschreitet, wobei dieser Schwellwert so festgelegt wird, dass er nur beim Zuführen der Bitfolge des zu suchenden binären Wortes oder einer nur wenig davon abweichenden Bitfolge erreicht bzw. überschritten wird.

In Fig. 3 ist ein Beispiel für den Aufbau eines optischen Strahlteilers dargestellt. Der aus dem Lichtleiter 20 austretende Lichtimpuls wird über eine Linse 40 auf ein binäres Phasengitter geworfen, dem eine weitere Linse 44 nachgeordnet ist. Solche binären Phasengitter, die eine bestimmte Anzahl zentraler Beugungsordnungen gleicher Helligkeit erzeugen, sind beispielsweise in der Zeitschrift «Optica Acta», 24 (1977), S. 505 ff angegeben. Das Beispiel in Fig. 3 gilt für 3 Beugungsordnungen, wodurch der aus dem Lichtleiter 20 austretende Lichtimpuls auf 3 Lichtleiter, z.B. die in Fig. 1 angegebenen Verzögerungslichtleiter 1, 2 und 3 verteilt wird. Durch Kreuzen solcher eindimensionalen Gitterstrukturen lassen sich auch zweidimensionale Anordnungen von Lichtleitern ausleuchten. Dadurch ergibt sich ein gedrängter Aufbau des Strahlteilers.

Anhang:

Tabelle

| Bitfolge | M/m |
|---|---|
| 1010100100010111110110011100001 | 8 |
| 0110101001000101111101100111000 | 8 |
| 1010001010100111011001001111011000 | 5.7 |
| 1110101000100101100111111001001010 | 6 |

## Patentansprüche

1. Anordnung zur Erkennung eines vorbestimmten Impulsmusters aus einem Impulsstrom, mit Verzögerungselementen, die derart gewählt sind, dass die Verzögerung eines Verzögerungselementes, das einem Impuls aus dem zu erkennenden Impulsmuster zugeordnet ist, dem relativen Zeitabstand des zu verzögernden Impulses in bezug auf den letzten Impuls aus dem Impulsmuster entspricht, und die weiter mit ihren einen Enden an ein Ende eines Leiters zum Transportieren des Impulsstromes parallel angeschlossen sind, weiter mit einem Koinzidenzelement zum Detektieren zeitlich koinzidierender Impulse an den anderen Enden der Verzögerungselemente, dadurch gekennzeichnet, dass die anderen Enden einer ersten Anzahl der Verzögerungselemente mit je einem Eingang eines ersten Addierers und die anderen Enden einer zweiten Anzahl der Verzögerungselemente mit je einem Eingang eines zweiten Addierers verbunden sind, wobei die Verbindung eines Endes mit beiden Addierern ausgeschlossen ist und wobei die erste und die zweite Anzahl zusammen die Gesamtheit der Verzögerungselemente bilden, wobei die Verteilung auf die erste und zweite Anzahl durch den Bitwert der Impulse des zu erkennenden Impulsmusters bestimmt ist, das aus einem Bitmuster mit vorgegebener Reihenfolge der Bitwerte 0 und 1 aufgebaut ist, wobei der eine Bitwert die Abwesenheit und der andere Bitwert das Vorhandensein eines Impulses im Zeitraster des Impulsstromes darstellt, wobei ein Ausgang des ersten Addierers und ein Ausgang des zweiten Addierers mit je einem Eingang des Koinzidenzelementes verbunden sind, das einen Differenzverstärker zur Differenzbestimmung zwischen einem Ausgangssignal des ersten Addierers und einem Ausgangssignal des zweiten Addierers enthält.

2. Anordnung nach Anspruch 1, dadurch gekennzeichnet, dass der Impulsstrom ein von einem Lichtleiter (20) transportierbarer Lichtimpulsstrom ist, dass der erste und der zweite Addierer fotoempfindliche Elemente (24, 26) und weiter die Verzögerungsleiter Verzögerungslichtleiter (0–12) sind.

3. Anordnung nach Anspruch 1 oder 2, dadurch gekennzeichnet, dass dem Differenzverstärker (28) ein Schwellwertschalter (30) nachgeschaltet ist, dessen Schwellwert der Differenz zwischen einem ersten und einem zweiten vorgegebenen Wert entspricht und der bei Überschreiten des Schwellwertes ein Übereinstimmungssignal abgibt.

4. Anordnung nach Anspruch 2 oder 3, dadurch gekennzeichnet, dass dem einen Ende aller Verzögerungslichtleiter (0–12) ein optischer Strahlenteiler (22) vorgeschaltet ist.

5. Anordnung nach Anspruch 4, dadurch gekennzeichnet, dass der Strahlenteiler (22) mindestens ein Phasengitter (42) enthält.

**Claims**

1. A device for the recognition of a predetermined pulse pattern from a pulse stream, comprising delay elements which are chosen so that the delay of a delay element associated with a pulse from the pulse pattern to be recognized corresponds to the relative time distance between the pulse to be delayed and the last pulse of the pulse pattern, said delay elements being connected at one end in parallel to one end of a conductor for transporting the pulse stream, said device furthermore comprising a coincidence element for the detection of time coincident pulses on the other ends of the delay elements, characterized in that the other ends of a first number of delay elements are connected to a respective input of a first adder, the other ends of a second number of delay elements being connected to a respective input of a second adder, connection on an end to both adders being precluded and the first and the second number together representing the assembly of delay elements the division into the first and the second numer being determined on the basis of · the bit value of the pulses of the pulse pattern to be recognized, said pulse pattern being composed of a bit pattern having a predetermined sequence of bit values 0 and 1, one bit value representing the absence of a pulse in the time window of the pulse stream and the other bit value representing the presence thereof, an output of the first adder and an output of the second adder each being connected to an input of the coincidence element which comprises a differential amplifier for determining the difference between an output signal of the first adder and an output signal of the second adder.

2. A device as claimed in Claim 1, characterized in that the pulse stream is a stream of light pulses which can be transported by an optical conductor (20), the first and the second adder being photosensitive elements (24, 26), the delay lines being optical delay lines (0–12).

3. A device as claimed in Claim 1 or 2, characterized in that the differential amplifier (28) is followed by a threshold switch (30) whose threshold value corresponds to the difference between a first and a second predetermined value and which supplies a correspondence signal when the threshold value is exceeded.

4. A device as claimed in Claim 2 or 3, characterized in that an optical beam splitter (22) precedes one end of all optical delay lines (0–12).

5. A device as claimed in Claim 4, characterized in that the beam splitter (22) comprises at least one phase grating (42).

**Revendications**

1. Dispositif pour reconnaître un échantillon d'umpulsions prédéterminé dans un flux d'impulsions, comportant des éléments à retard qui sont sélectionnés d'une manière telle que le retard d'un élément à retard, qui est associé à une impulsion de l'échantillon d'impulsions à reconnaître, corresponde à l'espacement relatif dans le temps de l'impulsion à retarder par rapport à la dernière impulsion de l'échantillon d'impulsions, et qui sont en outre connectés en parallèle, par leur une extrémité, à une extrémité d'un conducteur destiné à transporter le flux d'impulsions, et comportant, en outre, un élément à coïncidence pour détecter des impulsions coïncidant dans le temps aux autres extrémités des éléments à retard, caractérisé en ce que les autres extrémités d'un premier nombre d'éléments à retard sont connectées chacune à une entrée d'un premier additionneur et les autres extrémités d'un deuxième nombre d'éléments à retard sont connectées chacune à une entrée d'un deuxième additionneur, la connexion d'une extrémité aux deux additionneurs étant exclue et le premier et le deuxième nombre formant ensemble la totalité des éléments à retard, la répartition entre le premier et le deuxième nombre étant déterminée par la valeur binaire des impulsions de l'échantillon d'impulsions à reconnaître qui est constitué d'un échantillon de bits à séquence préétablie de valeurs binaires 0 et 1, la première valeur binaire représentant l'absence et l'autre valeur binaire la présence d'une impulsion dans la grille chronologique du flux d'impulsions, une sortie du premier additionneur et une sortie du second additionneur étant connectées chacune à une entrée de l'élément à coïncidence qui comprend un amplificateur de différence pour déterminer la différence entre un signal de sortie du premier additionneur et un signal de sortie du second additionneur.

2. Dispositif suivant la revendication 1, caractérisé en ce que le flux d'impulsions est un flux d'impulsions lumineuses pouvant être transporté par un guide de lumière (20), que le premier et le second additionneur sont des éléments photosensibles (24, 26) et qu'en outre, les lignes à retard sont des guides de lumière à retard (0 à 12).

3. Dispositif suivant la revendication 1 ou 2, caractérisé en ce que l'amplificateur de différence (28) est suivi d'un élément à seuil (30) dont le seuil correspond à la différence entre une première et une seconde valeur prédéfinies et qui, en cas de dépassement de la valeur de seuil par excès, produit un signal de correspondance.

4. Dispositif suivant la revendication 2 ou 3, caractérisé en ce qu'un diviseur optique (22) précède la première extrémité de tous les guides de lumière à retard (0 à 12).

5. Dispositif suivant la revendication 4, caractérisé en ce que le diviseur optique (22) comprend au moins un réseau de phase (42).

0 048 047

FIG.1

FIG.3

FIG.2